## Europäisches Patentamt
## European Patent Office
## Office européen des brevets

(11) Veröffentlichungsnummer: **0 054 646**
**B1**

(12) # EUROPÄISCHE PATENTSCHRIFT

(45) Veröffentlichungstag der Patentschrift:
02.10.85

(51) Int. Cl.⁴: **G 01 S 7/46**, G 01 S 13/91,
G 06 F 15/48, G 01 S 13/72

(21) Anmeldenummer: 81108235.3

(22) Anmeldetag: 12.10.81

(54) Radargerät zur Überwachung eines Luftraumes.

(30) Priorität: 05.12.80 DE 3046010

(43) Veröffentlichungstag der Anmeldung:
30.06.82 Patentblatt 82/26

(45) Bekanntmachung des Hinweises auf die Patenterteilung:
02.10.85 Patentblatt 85/40

(84) Benannte Vertragsstaaten:
BE CH FR GB IT LI NL SE

(56) Entgegenhaltungen:
CH - A - 550 409
DE - B - 1 279 132
DE - B - 2 429 024

SIEMENS FORSCHUNGS- UND
ENTWICKLUNGSBERICHTE, Band 2, 1973, Nr. 6,
Springer Verlag, Berlin G. CLEMENT "Verwendung
eines Assoziativspeichers beim Aufbau von Flugspuren
aus Radardaten" Seiten 364-367
P. SCHNUPP "Systemprogrammierung" 1975, WALTER
DE GRUYTER, Berlin-New York Seite 25
DER ELEKTRONIKER, 13. Jahrgang, Oktober 1974, Heft
10, Aarau ROBERT FELLER "Grundlagen und
Anwendungen der Radartechnik" EL16-EL19

(73) Patentinhaber: Siemens Aktiengesellschaft, Berlin und
München Wittelsbacherplatz 2, D-8000 München 2 (DE)

(72) Erfinder: Flad, Eberhard, Dr, Dipl.-Ing., Wetzelstrasse 8,
D-8000 München 71 (DE)

# Beschreibung

Die Erfindung bezieht sich auf ein Radarsystem zur Überwachung eines Luftraumes mit einer Einrichtung zum automatischen Flugspurenaufbau (Tracking), in welche von einem Radardatenextraktor Zielmeldungen (plots) in Form von Datensätzen eingegeben werden.

Eine Flugspur besteht bekanntlich aus einer Reihe von zeitlich aufeinanderfolgenden Positionsangaben, d. h. Datensätzen aus dem Radargerät, die von ein und demselben Zielobjekt herrühren. Die automatische Flugspurbildung umfaßt zwei Teilaufgaben, nämlich zum einen die Initiierung einer Spur, wenn ein neues Objekt in den zu überwachenden Luftraum gelangt, und zum anderen die Zuordnung der laufend empfangenen Radarechos zu einer der bereits etablierten Spuren. Voraussetzung zur Erfüllung der ersten Teilaufgabe ist die periodische Abtastung des zu überwachenden Luftraumes. Eine solche Abtastung läßt sich beispielsweise durch eine mit konstanter Drehzahl rotierende Rundsuchantenne vornehmen. Die Daten einer mit konstanter Drehzahl rundsuchenden Antenne enthalten die zur Flugspurbildung erforderlichen Informationen. Ein solches Verfahren wird als »passive« Zielverfolgung bezeichnet, weil die Bewegung der Antenne nicht von ihren Messungen beeinflußt wird. In üblicher Weise wird bei einem solchen System zunächst untersucht, ob ein Datensatz aus dem Radardatenextraktor zu einer vorhandenen Spur paßt. Trifft dies nicht zu, so wird er als Ausgangspunkt einer neuen Flugspur genommen. Das Zuordnungskriterium ist gewöhnlich die mehr oder weniger gute Übereinstimmung einer Positionsschätzung mit der vom Radardatenextraktor gelieferten Messung. Es muß dabei jedoch beachtet werden, daß eine Positionsübereinstimmung allein nicht ausreicht, da die Vorhersage nur für einen bestimmten Zeitpunkt stimmt. Liegt eine bereits etablierte Flugspur vor, so läßt sich aus dem Spurverlauf eine Positionsschätzung für einen beliebigen Zeitpunkt ableiten. Die Positionsschätzung liegt in einem sogenannten Erwartungsraum, der in der Regel durch einen Quader abgeschätzt wird. Dies bringt u. a. den Vorteil, daß es gleichgültig ist, ob eine Messung in den Erwartungsraum um eine Schätzung paßt oder umgekehrt eine Schätzung in den entsprechenden Raum um eine Messung. Soll z. B. eine Messung einer Schätzung zugeordnet werden, so muß im Prinzip diese Messung mit allen Schätzungen verglichen werden. Das bedeutet acht Vergleiche von Zahlenpaaren, da für drei Raumkoordinaten und die Zeit je eine obere und eine untere Grenze vorzugeben sind. Bei günstiger Programmierung läßt sich die für einen Vergleich erforderliche Rechenzeit in den üblichen Datenverarbeitungseinrichtungen zur automatischen Flugspurenbildung (Tracking-Einrichtung) nicht unter ein bestimmtes Zeitmaß drücken, da noch zusätzliche Operationen wie z. B. die Adressenfortschaltung durchgeführt werden müssen. Das bedeutet in Fällen, bei denen aufgrund der dichten Luftlage viele Flugspuren zu vergleichen sind, allein für die Zuordnung bereits eine hohe Rechenzeit. Eine in der beschriebenen Weise arbeitende Tracking-Einrichtung hat somit bereits aus Gründen der begrenzten Rechengeschwindigkeit eine begrenzte Tracking-Kapazität, d. h. es kann nur eine bestimmte Anzahl von Zielmeldungen (Tracks) während eines vollständigen Absuchvorganges des zu überwachenden Luftraumes verarbeitet werden.

Auch bei paralleler Trackingdaten-Verarbeitung z. B. mittels Assoziativspeicher als Spezialrechenwerk für Flugspuren-Zuordnungen — wie sie aus dem Aufsatz »Verwendung eines Assoziativspeichers beim Aufbau von Flugspuren aus Radardaten« von G. Clement aus der Zeitschrift »Siemens Forschungs- und Entwicklungsberichte« Band 2 (1973) Nr. 6, Seiten 364 bis 367 bekannt ist — ist nur eine bestimmte Tracking-Kapazität möglich, die bei hoher Flugdichte überschritten werden kann.

Bei den bisher bekannten Geräten wird dann, wenn eine solche Trackingdaten-Einrichtung zur weiteren Zieldatenverarbeitung aufgrund ihrer begrenzten Rechnerkapazität nicht mehr aufnahmefähig sein sollte, die Ausblendung von Radarsektoren veranlaßt. Diese Methode hat jedoch den Nachteil, daß während der Ausblendezeit bezüglich der in den jeweils ausgeblendeten Sektoren anfallenden Daten überhaupt keine Rechenvorgänge und damit keine Flugspurenbildungen mehr stattfinden können.

Aufgabe der Erfindung ist es, für die Tracking-Verarbeitungseinrichtung einen Überlastschutz zu schaffen, der eine Flugspurenbildung in gesamten zu überwachenden Luftraum und nicht nur in einem Teil desselben auch bei hohen Zielmeldungsraten ermöglicht.

Gemäß der Erfindung, die sich auf ein Radarsystem der eingangs genannten Art bezieht, wird diese Aufgabe dadurch gelöst, daß der Tracking-Einrichtung ein sogenanntes Plot-Filter mit einer Vielzahl von Speicherplätzen vorgeschaltet ist, welche diskreten Raumzellen zugeordnet sind, in die der zu überwachende Luftraum aufgeteilt ist, daß in den Speicherplätzen jeweils eine Zählgröße gespeichert wird, die immer dann um eine erste, festgelegte Größe ausgehend vom Wert Null heraufgezählt wird, wenn der Radardatenextraktor für die zugeordnete Raumzelle während einer Radarperiode eine Zielmeldung (Plot) liefert, und immer dann um eine festgelegte Größe und zwar höchstens bis zum Wert Null heruntergezählt wird, wenn der Extraktor für die zugeordnete Zelle während einer Radarperiode keine Zielmeldung ausgibt, und daß im Plot-Filter eine Schwellenwerteinrichtung vorgesehen ist, mittels welcher für alle Speicherplätze eine Zählgrößen-Schwelle eingestellt wird, bei deren Überschreiten die gerade anfallende Zielmeldung nicht an die Tracking-Einrichtung weitergegeben wird. Es werden somit von der Weiterleitung zur Tracking-Einrichtung solche Zielmeldungen ausgenommen, die auf Zielobjekte in Raumzellen zurückzuführen sind, in welchen während vorhergehender Scans schon mehrere Zielmeldungen aufgetreten sind. Eine Zieldatenverarbeitung ist für solche Raumzellen nicht mehr erforderlich, so daß die Tracking-Einrichtung entlastet wird und für solche Berechnungsvorgänge frei bleibt, die auf einer Spurinitiierung oder auf einer Weiterführung einer Flugspur in eine neue Raumzelle beruhen.

Das dem Überlastschutz der Tracking-Einrichtung dienende Plotfilter läßt sich gemäß einer Weiterbildung der Erfindung dadurch verfeinern, daß mittels der Schwelleneinrichtung zwei verschiedene Zählgrößen-Schwellen für die Speicherplätze eingestellt werden, daß bei Überschreiten der oberen Schwelle keinerlei Zielmeldungen an die Tracking-Einrichtung weitergegeben werden und bei Überschreiten der unteren Schwelle-Zielmeldungen nur zum Zwecke der Fortsetzung etablierter Flugspuren, aber nicht zum Zwecke der Initiierung einer neuen Spur an die Tracking-Einrichtung weitergeleitet werden. Die im Bereich zwischen den beiden Schwellen auftretenden Zielmeldungen werden somit nur für die Fortsetzung bereits etablierter Flugspuren zugelassen, nicht jedoch für die Initiierung neuer Spuren.

Prinzipiell läßt sich die Einstellung der Schwellen unter gewissen Annahmen über die Statistik der Störungen im voraus bestimmen, z. B. durch Simulation. Da sich aber die Umgebungsbedingungen sehr stark ändern können, ist es vorteilhaft, zur geeigneten Einstellung der Schwellen eine Regelung vorzusehen. Das Regelkriterium für die Schwelleneinstellung ist dabei zweckmäßig so gewählt, daß die Anzahl der im Mittel während der Zeitdauer (Scan) für ein vollständiges Absuchen des zu überwachenden Luftraumes an die Tracking-Einrichtung weitergegebenen Zielmeldungen in einem kleinen Intervall um den Wert $p \cdot N$ liegt, wobei N die maximale Track-Verarbeitungszahl der Tracking-Einrichtung pro Scan und p ein festgelegter Sicherheitsfaktor ist, der als Reserve aufgrund statistischer Schwankungen kleiner als Eins ist.

Die Regelung läßt sich noch verfeinern, wenn man zwei Regelkreise vorsieht, nämlich einen langsamen Kreis, mit dem allmählich Umgebungsänderungen (Clutter) ausgeregelt werden, und einen schnellen Kreis, der auf rasche Änderungen, die z. B. durch elektronische Gegenmaßnahmen (ECM) oder beim Einschalten des Radars entstehen, anspricht. Bei der langsamen Regelung wird die Anzahl der abgegebenen Zielmeldungen über einen Zeitraum von mehreren Scans beobachtet und die Schwelle bei Über- bzw. Unterschreitung behutsam nachgeregelt. Bei der schnellen Regelung wird über ein kurzes Intervall beobachtet, z. B. eine Sekunde. Sobald innerhalb dieses Intervalls ein bestimmter Grenzwert überschritten wird, wird die Schwelle drastisch reduziert, d. h. der Sperrbereich wesentlich erhöht.

Im folgenden wird die Erfindung anhand von vier Figuren erläutert. Es zeigt

Fig. 1 das Blockschaltbild eines Radarsystems mit einer Tracking-Einrichtung und einem Überlastschutz nach der Erfindung,

Fig. 2 eine Darstellung zur Verdeutlichung der Zuordnung zwischen Raumzelle und Speicherplatz im Plot-Filter, und

Fig. 3 und 4 zwei schematische Darstellungen eines Speicherplatzes zur Erklärung der Schwellenwirkung bei der Funktion des Plot-Filters.

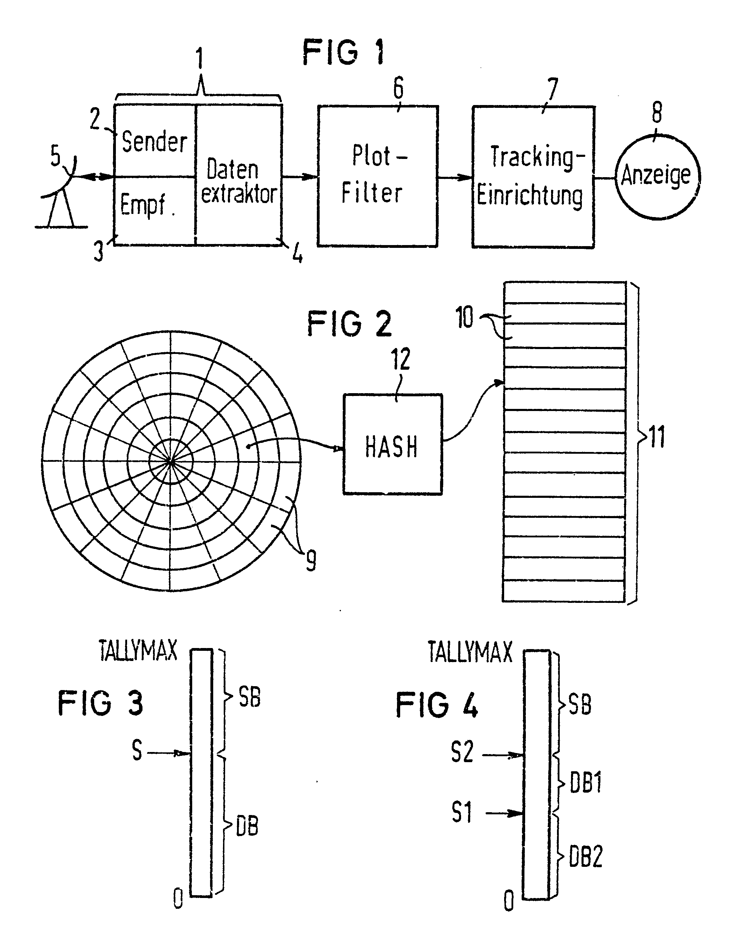

Das in Fig. 1 dargestellte Überwachungs-Radarsystem weist ein Radargerät 1 auf, welches aus einem Sendeteil 2, einem Empfangsteil 3 und einem Radardatenextraktor 4 zusammengesetzt ist. Zur Abstrahlung der Radarsendeimpulse sowie zum Empfang der Echoimpulse dient eine gleichmäßig rotierende Radarrundsuchantenne 5. Die vom Radardatenextraktor 4 ausgegebenen Zielmeldungsdatensätze werden über ein sogenanntes Plot-Filter 6 einer Tracking-Einrichtung 7 zugeführt, in welcher die automatische Flugspurbildung mit Hilfe eines die Daten verarbeitenden Rechners in bekannter Weise erfolgt. Die Kapazität der Tracking-Einrichtung 7 beträgt N Tracks, d. h. das Tracking ist so ausgelegt, daß es N Tracks während eines Scan-Vorgangs verarbeiten kann. Der zu überwachende Luftraum wird mittels der Antenne 5 periodisch abgetastet. Die von der Tracking-Einrichtung 7 ermittelte Luftlage wird in einer Anzeigevorrichtung 8 dargestellt. Mit Ausnahme des Plot-Filters 6 sind derartige Überwachungsradarsysteme bekannt, z. B. aus der Zeitschrift »Der Elektroniker« Nr. 10, 1974, EL 17 und EL 18.

Das Plot-Filter 6 dient als Überlastschutz für die nachfolgende Tracking-Einrichtung 7 und ist ein adaptives Filter, dessen Charakteristik on line an veränderliche Umgebungsbedingungen angepaßt werden kann. Das Plot-Filter 6 wird so eingestellt, daß im Mittel pro Überwachungsperiode des gesamten Luftraums (= Scan) nur $p \cdot N$ mit z. B. p = 80% Zielmeldungen (Plots) an die Tracking-Einrichtung 7 weitergegeben werden. p ist deswegen kleiner als 1 zu wählen, weils aufgrund statistischer Schwankungen eine Reserve bestehen muß. Der Wert von p läßt sich praktisch z. B. durch Simulation bestimmen.

Wie Fig. 2 zeigt, wird der zu überwachende Luftraum in diskrete Zellen 9 aufgeteilt, die im allgemeinen größer als die Radarauflösungszellen sind. Die Aufteilung kann beispielsweise — wie auch in Fig. 2 — in Radar-Primärkoordinaten erfolgen. Den Raumzellen 9 werden Speicherplätze 10 eines im Plot-Filter angeordneten Speichers 11 zugeordnet. Die Raumzellen des zu überwachenden Radargebiets müssen deswegen größer als die Radarauslösungszellen dimensioniert werden, weil eine Abbildung der Radarauflösungszellen in den Arbeitsspeicher 11 im allgemeinen wegen einer zu großen Anzahl von Speicherplätzen 10, insbesondere bei 3 D-Radars, nicht möglich ist. Es kann vorausgesetzt werden, daß die überwiegende Zahl der Raumzellen 9 der Abtastungen keine Zielmeldungen erbringt, was zur Folge hätte, daß eine Vielzahl der Speicherplätze 10 im Plot-Filter leer bleiben würde. Es ist somit eine Verdichtung bei der Abbildung in den Speicher 11 möglich, wozu bekannte Verdichtungsverfahren wie z. B. das HASH-Verfahren angewendet werden können. In Fig. 2 ist diese Möglichkeit durch die Vorschaltung des Blocks 12 vor den Speicher 11 angedeutet. Das HASH-Verfahren ist beispielsweise aus dem Buch von P. Schnupp: »Systemprogrammierung«, Berlin, de Gruyter Verlag, 1975 bekannt.

Zu Beginn eines Überwachungsvorganges werden alle Speicherzellen 10 auf den Wert Null gesetzt. Immer wenn eine Zielmeldung vom Radardatenextraktor bezüglich einer Raumzelle ausgegeben wird, erhöht sich der Inhalt der zugeordneten Speicherzelle 10 um einen festgelegten Wert, z. B. um den Betrag 2 bis zu einem Maximalwert, der mit TALLY-MAX bezeichnet wird. Immer wenn eine Zelle 9 während einer Radarperiode über den Datenextraktor keine Zielmeldung erbringt, wird der Inhalt des zugeordneten Speicherplatzes 10 um einen bestimmten Wert erniedrigt, z. B. um den Betrag Eins, bis zum Minimalwert Null. Um welchen Betrag man den Zählerstand in einem Speicherplatz 10 in zweckmäßiger Weise erhöht und erniedrigt, läßt sich durch Simulation ermitteln.

Es wird somit für jede Zielmeldung zunächst einmal der zugehörige Speicherplatz ermittelt und dessen Inhalt entsprechend erhöht.

Für die Nutzung der auf diese Weise aufgebauten Filtercharakteristik (Adaptives Filter) bestehen verschiedene Möglichkeiten.

Baut man das Filter als Sperrfilter auf, dann gibt es nur eine einzige Schwelle. In F i g. 3 ist ein Speicherplatz schematisch zur Verdeutlichung der Wirkung dieser Schwelle bei der Funktion des Plot-Filters dargestellt. Wenn der Inhalt des Speicherplatzes die Schwelle S übersteigt, wird die zugehörige Zielmeldung unterdrückt, d. h. sie wird nicht an die Tracking-Einrichtung (7 in Fig. 1) weitergegeben. In Fig. 3 ist unterhalb der Schwelle S — ausgehend vom Zählwert Null — der Durchlaßbereich DB und oberhalb der Schwelle S der Sperrbereich SB. Gezählt werden kann maximal bis zum Wert TALLYMAX.

Fig. 4 zeigt eine schematische Darstellung eines Speicherplatzes zur Verdeutlichung eines halbdurchlässigen Filters. Bei dieser Filtercharakteristik gibt es zwei Schwellen S1 und S2. Die Zielmeldungen im Bereich DB1 zwischen den beiden Schwellen S1 und S2 werden nur für die Fortsetzung etablierter Flugspuren zugelassen, nicht jedoch für die Initiierung neuer Spuren. Zwischen dem Zählwert Null und dem Schwellwert S1 liegt ein Bereich DB2, in welchem Zielmeldungen sowohl für die Fortsetzung bereits etablierter Flugspuren als auch für die Initiierung neuer Spuren zur Tracking-Einrichtung (7 in Fig. 1) durchgelassen werden. Zwischen dem Schwellwert S2 und dem maximal möglichen Zählwert TALLYMAY liegt der Sperrbereich SB, in welchem die zugehörige Zielmeldung unterdrückt, d. h. nicht an die Tracking-Einrichtung weitergegeben wird.

Wie bereits ausführlich beschrieben worden ist, werden die Schwellen S bzw. S1 und S2 in zweckmäßiger Weise geregelt, wobei das Regelkriterium durch die Anzahl der im Mittel an die Tracking-Einrichtung weitergegebenen Zielmeldungen gebildet wird.

## Patentansprüche

1. Radarsystem zur Überwachung eines Luftraumes mit einer Einrichtung (7) zum automatischen Flugspurenaufbau (Tracking), in welche in einem Radardatenextraktor (4) Zielmeldungen (plots) in Form von Datensätzen eingegeben werden, dadurch gekennzeichnet, daß der Tracking-Einrichtung (7) ein sogenanntes Plot-Filter (6) mit einer Vielzahl von Speicherplätzen (10) vorgeschaltet ist, welche diskreten Raumzellen (9) zugeordnet sind, in die der zu überwachende Luftraum aufgeteilt ist, daß in den Speicherplätzen (10) jeweils eine Zählgröße gespeichert wird, die immer dann um eine erste, festgelegte Größe ausgehend vom Wert Null heraufgezählt wird, wenn der Radardatenextraktor (4) für die zugeordnete Raumzelle (9) während einer Radarperiode eine Zielmeldung (Plot) liefert, und immer dann um eine festgelegte Größe und zwar höchstens bis zum Wert Null heruntergezählt wird, wenn der Extraktor (4) für die zugeordnete Zelle (9) während einer Radarperiode keine Zielmeldung ausgibt, und daß im Plot-Filter (6) eine Schwellenwerteinrichtung vorgesehen ist, mittels welcher für alle Speicherplätze eine Zählgrößen-Schwelle (S) eingestellt wird, bei deren Überschreiten die gerade anfallende Zielmeldung nicht an die Tracking-Einrichtung (7) weitergegeben wird.

2. Radarsystem nach Anspruch 1, dadurch gekennzeichnet, daß mittels der Schwelleneinrichtung zwei verschiedene Zählgrößen-Schwellen (S1, S2) für die Speicherplätze (10) eingestellt werden, daß bei Überschreiten der oberen Schwellen (S2) keinerlei Zielmeldungen an die Tracking-Einrichtung (7) weitergegeben werden und bei Überschreiten der unteren Schwelle (S1) Zielmeldungen nur zum Zwecke der Fortsetzung etablierter Flugspuren, aber nicht zum Zwecke der Initiierung einer neuen Spur an die Tracking-Einrichtung (7) weitergeleitet werden.

3. Radarsystem nach Anspruch 1 oder 2, dadurch gekennzeichnet, daß zur geeigneten Einstellung der Schwellen (S; S1, S2) eine Regelung vorgesehen ist.

4. Radarsystem nach Anspruch 3, dadurch gekennzeichnet, daß das Regelkriterium für die Schwelleneinstellung so gewählt ist, daß die Anzahl der im Mittel während der Zeitdauer (Scan) für ein vollständiges Absuchen des zu überwachenden Luftraumes an die Tracking-Einrichtung (7) weitergegebenen Zielmeldungen in einem kleinen Intervall um den Wert $p \cdot N$ liegt, wobei N die maximale Track-Verarbeitungszahl der Tracking-Einrichtung (7) pro Scan und p ein festgelegter Sicherheitsfaktor ist, der als Reserve aufgrund statistischer Schwankungen kleiner als Eins ist.

5. Radarsystem nach den Ansprüchen 3 und 4, dadurch gekennzeichnet, daß die Regelung zwei Kreise enthält, nämlich einen langsamen Kreis, mit dem allmähliche Umgebungsänderungen (Clutter) ausgeregelt werden, und einen schnellen Kreis, der auf rasche Änderungen, die z. B. durch elektronische Gegenmaßnahmen (ECM) oder beim Einschalten des Radars entstehen, anspricht.

6. Radarsystem nach einem der vorhergehenden Ansprüche, dadurch gekennzeichnet, daß bei der Zuordnung der Speicherplätze (10) zu den Raumzellen (9) ein an sich bekanntes Abbildungs-Verdichtungsverfahren, beispielsweise das HASH-Verfahren, angewendet wird.

## Claims

1. A radar system for monitoring an air space, with a device (7) for automatic tracking into which plots are input in the form of data sets, in a radar data extractor (4), characterised in that the tracking device (7) is preceded by a so-called plot filter (6) having a plurality of storage positions (10) assignet to discrete spatial cells (9) into which the air space which is to be monitored is divided, each of which storage positions (10) stores a numerical value that is increased by a first predetermined value, commencing from zero, whenever the radar data extractor (4) supplies a plot for the assigned spatial cell (9) during a radar period, and is decreased by a predetermined value at the maximum to zero, whenever the extractor (4) does not emit a plot for the assigned cell (9) during a radar period, and that the plot filter (6) contains a threshold value device by means of which a numerical value threshold (S) is set for all the storage positions, the presently occurring plot not being forwarded to the tracking device (7) if this threshold is exceeded.

2. A radar system as claimed in claim 1, characterised in that two different numerical value thresholds (S1, S2) are set for the storage positions (10) by means of the threshold device, that when the upper thresholds (S2) are exceeded no plots are forwarded to the tracking device (7) and when the lower threshold (S1) is overshot plots are only forwarded to the tracking device (7) to continue established tracks, but not for the purpose of initiating a new track.

3. A radar system as claimed in claim 1 or 2, characterised in that a regulating unit is provided for the suitable adjustment of the thresholds (S; S1, S2).

4. A radar system as claimed in claim 3, characterised in that the regulating criterion for the threshold adjustment is selected such that the average number of plots forwarded to the tracking device (7) during one complete scan of the air space to be monotored occurs within a small interval around the value p · N where N is the maximum track processing number of the tracking device (7) per scan and p is a predetermined safety factor serving asreserve to cover statistical fluctuations, being smaller than unity.

5. A radar system as claimed in claims 3 and 4, characterised in that the regulating unit contains two circuits, namely a slow circuit to compensate gradual environmental changes (clutter), and a rapid circuit which responds to rapid changes which occur, for example, as a result of electronic counter-measures (ECM) or when the radar is switched on.

6. A radar system as claimed in one of the preceding claims, characterised in that the assignment of the storage positions (10) to the spatial cells (9) employs an image compression process known per se, for example the HASH process.

## Revendications

1. Système radar pour la surveillance de l'espace aérien, comportant un dispositif (7) servant à obtenir le tracé automatique des trajectoires de vol (poursuite) et dans lequel, dans un extracteur (4) de données du radar, les signalisations de cibles (plots) sont introduites sous la forme d'ensembles de données, caractérisé par le fait qu'en amont du dispositif de poursuite (7) est branché ce qu'on appelle un filtre de tracés (6) comportant un grand nombre de cases de mémoire (10), qui sont associées à des secteurs d'espace discrets (9), en lesquels l'espace aérien devant être contrôlé est subdivisé, que dans chacune des cases de mémoire (10) se trouvent mémorisées respectivement une grandeur chiffrée qui est toujours augmentée d'une première grandeur fixée, par comptage progressif à partir de la valeur zéro lorsque l'extracteur (4) des données du radar délivre pour le secteur d'espace associé (9), pendant une période du radar, une signalisation de cible (plots) et qui est toujours diminuée d'une grandeur fixée, par comptage régressif, et ce tout au plus jusqu'à la valeur zéro, lorsque l'extracteur (4) ne délivre aucune signalisation de cible pendant une période du radar pour le secteur associé (9), et que dans le filtre de tracés (6) il est prévu un dispositif à valeur de seuil à l'aide duquel se trouve réglé, pour toutes les cases de mémoire, un seuil de grandeur chiffrée (S), lors du dépassement duquel la signalisation de cible arrivant précisément n'est pas retransmise au dispositif de poursuite (7).

2. Système radar suivant la revendication 1, caractérisé par le fait que deux seuils différents (S1, S2) de la valeur chiffrée sont réglés au moyen du dispositif à valeur de seuil pour les cases de mémoire (10), que lors du dépassement du seuil supérieur (S1), aucun type de signalisation de cible n'est retransmis au dispositif de poursuite (7) et que lors du dépassement du seuil inférieur (S1), des signalisations de cibles sont retransmises au dispositif de poursuite (7) uniquement en vue de la poursuite de tracés établis de trajectoires de vol, mais non pour déclencher le tracé d'une nouvelle trajectoire.

3. Système radar suivant la revendication 1 ou 2, caractérisé par le fait qu'il est prévu un dispositif de régulation servant à réaliser le réglage approprié des seuils (S; S1, S2).

4. Système radar suivant la revendication 3, caractérisé par le fait que le critère choisi pour le réglage des seuils est choisi de telle sorte que le nombre des signalisations de cibles, qui sont transmises au dispositif de poursuite (7) en moyenne pendant la durée (balayage) pour une supervision complète de l'espace aérien contrôlé, est situé dans un petit intervalle autour de la valeur $p \cdot N$, N étant le nombre maximum de trajectoires traitées par le dispositif de poursuite (7) pour chaque balayage et p étant un facteur de sécurité fixe, qui, en tant que réserve en raison de variations statistiques, est inférieur à un.

5. Système radar selon les revendications 3 et 4, caractérisé par le fait rue le dispositif de régulation contient deux circuits, à savoir un circuit lent, à l'aide duquel des variations progressives de l'environnement (signaux parasites) sont éliminées par réglage, et un circuit rapide, qui répond à des variations rapides produites par exemple par des contre-mesures électroniques (ECM) ou lors du branchement du radar.

6. Système radar selon l'une des revendications précédentes, caractérisé par le fait que dans le cas de l'association des cases de mémoire (10) à des secteurs d'espace (9), on utilise un procédé connu en soi de compression des images formées, par exemple le procédé HASH.

# FIG 1

# FIG 2

# FIG 3

TALLYMAX

SB
S
DB
0

# FIG 4

TALLYMAX

SB
S2
DB1
S1
DB2
0